(19) Europäisches Patentamt
European Patent Office
Office européen des brevets

(11) EP 1 605 012 A1

(12) EUROPEAN PATENT APPLICATION

(43) Date of publication:
**14.12.2005 Bulletin 2005/50**

(21) Application number: **04076703.0**

(22) Date of filing: **10.06.2004**

(51) Int Cl.[7]: **C08J 5/18**, C08L 27/12, C08L 79/08, B29D 7/01, B29C 41/00, B29C 47/00, H01B 3/44, H01B 3/30, H01C 7/02
// (C08L27/12, 79:08)

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **SOLVAY (Société Anonyme)**
**1050 Bruxelles (BE)**

(72) Inventors:
- **Garrison, David**
  **Yardley, PA 19067 (US)**
- **Sirusas, Peter**
  **Landenberg, PA 19350 (US)**
- **Kapeliouchko, Valeri**
  **15100 Allessandria (IT)**
- **Polastri, Fabio**
  **20052 Monza (IT)**
- **Marchese, Enrico**
  **14030 Asti (IT)**
- **Stern, Brian**
  **Duluth, Georgia 30097 (US)**

(74) Representative: **Jacques, Philippe et al**
**Solvay S.A.**
**Département de la Propriété Industrielle,**
**Rue de Ransbeek, 310**
**1120 Bruxelles (BE)**

(54) **Fluoropolymer tape, article comprising a fluoropolymer tape and process for manufacturing a fluoropolymer tape**

(57) Tape comprising a polymer composition comprising at least one fluoropolymer and at least one aromatic polyimide chosen from

- aromatic polyamide-imides and aromatic polyesterimides
  [aromatic polyimides of Group (I)],

and, in addition, from

- aromatic polyimides other than aromatic polyimides of Group (I)
  [aromatic polyimides of Group (II)],

provided that, when the polymer composition is free of aromatic polyimides of Group (I), it comprises more than 5 wt. % (based on the total weight of the composition) of at least one aromatic polyimide chosen from aromatic polyimides of Group (II).

Article comprising said tape.

Processes especially well-adapted for manufacturing said tape.

Use of an aromatic polyimide as an additive of a polymer composition comprising a fluoropolymer, to improve the abrasion resistance either of a tape comprising said polymer composition, or of an article comprising an outermost layer which covers at least partially the article, said outermost layer comprising a tape comprising said polymer composition.



Printed by Jouve, 75001 PARIS (FR)

## Description

This invention relates to a fluoropolymer tape with improved properties, in particular to a polytetrafluoroethylene PTFE tape with improved abrasion resistance, and to an article comprising it, in particular a multi-layered cable assembly the outermost layer of which is the tape. It relates also to a process for preparing the fluoropolymer tape.

It is known that fluoropolymer tapes can be used with some beneficial effects in various applications, notably as the outermost layer of electric cable assemblies, in which they insulate said electric cable assemblies. Cable assemblies are often used in critical applications where reliable operation over long periods of use is required, especially as parts of aircrafts.

It has been observed that the prior art fluoropolymer tapes, especially prior art extruded PTFE tapes, had some properties at an insufficiently low level, in particular low wear resistance, which generally resulted in a dramatic decrease of the reliability over long periods of use of the cable assemblies as above described.

Attempts have already been made to modify some properties of fluoropolymer tapes through the incorporation of additives (e.g. titanium dioxide as laser markable agent). Since, in most applications, the thickness of the fluoropolymer tapes has to be as low as possible (this is especially true for fluoropolymer tapes comprised in cable assemblies for signal transmissions in aircrafts), the additives, whatever they were, were generally poorly (i.e. non homogenously) distributed in said fluoropolymer tapes.

There is a strong need for fluoropolymer tapes, in particular for thin fluoropolymer tapes, exhibiting improved properties, in particular improved abrasion resistance, while maintaining all their beneficial properties at a high level, e.g. excellent insulating properties. It is an objective of the present invention to fulfill this need.

With this end in view, the present invention concerns a tape comprising a polymer composition comprising at least one fluoropolymer and at least one aromatic polyimide chosen from

- aromatic polyamide-imides and aromatic polyesterimides [aromatic polyimides of Group (I)],

and, in addition, from

- aromatic polyimides other than aromatic polyimides of Group (I) [aromatic polyimides of Group (II)],

provided that, when the polymer composition is free of aromatic polyimides of Group (I), it comprises more than 5 wt. % (based on the total weight of the composition) of at least one aromatic polyimide chosen from aromatic polyimides of Group (II).

To the purpose of the present invention, "tape" is intended to denote any piece of matter having :

- a thickness below 2.00 mm,
- a thickness over width ratio (T/W) below 0.50, and
- a width over length ratio (W/L) below 0.50.

The tape is advantageously a piece of matter suitable for being stretched on or around at least part of an object to the purpose of covering this part, fastening it and/or improving its properties, especially strengthening it.

The tape is advantageously flexible.

The thickness of the tape is preferably below 0.50 mm, more preferably below 0.25 mm, and still more preferably below 0.15 mm ; in addition, it is advantageously above 0.001 mm, preferably above 0.005 mm, more preferably above 0.010 mm, and still more preferably above 0.015 mm.

The width of the tape is advantageously below 1000 mm, preferably below 400 mm, more preferably below 100 mm, and still more preferably below 40 mm. In addition, the width of the tape is advantageously above 1.0 mm, preferably above 4.0 mm, and more preferably above 10 mm.

The W/L ratio of the tape is preferably below 0.20, more preferably below 0.10, still more preferably below 0.05 and the most preferably below 0.01.

When it is taken alone (i.e. when it is not comprised in an article), the tape is advantageously untwisted.

One or both lateral edges and/or one or both extremities of the tape can consist of a matter other than the polymer composition. Advantageously more than 50 wt. %, preferably more than 90 wt. % and still more preferably more than 99 wt. % of the tape are in the polymer composition. It is most preferred that the tape consists of the polymer composition.

To the purpose of the present invention, "fluoropolymer" is intended to denote any polymer comprising more than 50 wt. % of recurring units derived from at least one ethylenically unsaturated monomer comprising at least one fluorine atom (hereafter, fluorinated monomer).

The fluoropolymer comprises preferably more than 75 wt. %, more preferably more than 90 wt. % of recurring

units derived from the fluorinated monomer, and still more preferably more than 97 wt. % of recurring units derived from the fluorinated monomer.

The fluorinated monomer comprises preferably several fluorine atoms. More preferably, it comprises more fluorine atoms than hydrogen atoms. Still more preferably, it is perfluorinated. The most preferred flurorinated monomer is tetrafluoroethylene.

Excellent results have been obtained with homopolymers of tetrafluoroethylene and with copolymers of tetrafluoroethylene comprising more than 97 wt. % of recurring units derived from tetrafluoroethylene. The other recurring units were derived from at least one comonomer chosen from hydrogenated monomers and fluorinated monomers.

Examples of suitable hydrogenated comonomers are ethylene, propylene, and acrylic monomers, like methyl methacrylate, acrylic acid, methacrylic acid and hydroxyethyl acrylate, as well as styrene monomers, like styrene.

Examples of suitable fluorinated comonomers are :

- $C_3$-$C_8$ perfluoroolefins, such as hexafluoropropene;
- $C_2$-$C_8$ hydrogenated monofluoroolefins, such as vinyl fluoride;
- vinylidene fluoride and trifluoroethylene,
- perfluoroalkylethylenes complying with formula $CH_2$=CH-$R_{f0}$, in which $R_{f0}$ is a $C_1$-$C_6$ perfluoroalkyl;
- chloro- and/or bromo- and/or iodo-$C_2$-$C_6$ fluoroolefins, like chlorotrifluoroethylene;
- fluoro- and perfluoroalkylvinylethers complying with formula $CF_2$=CFO$R_{f1}$ in which $R_{f1}$ is a $C_1$-$C_6$ fluoro- or perfluoroalkyl, e.g. $CF_3$, $C_2F_2$, $C_3F_7$;
- $CF_2$=CFO$X_0$ (per)fluoro-oxyalkylvinylethers, in which $X_0$ is a $C_1$-$C_{12}$ alkyl, or a $C_1$-$C_{12}$ oxyalkyl, or a $C_1$-$C_{12}$ (per) fluorooxyalkyl having one or more ether groups, like perfluoro-2-propoxy-propyl;
- fluorodioxoles, especially perfluorodioxoles.

Comonomers imparting high thermal stability to the tetrafluoroethylene polymer are preferred.

The standard specific gravity of the fluoropolymer, measured according to ASTM D4895, is advantageously of at least 2.10 g/cm$^3$, preferably of at least 2.13 g/cm$^3$ and more preferably of at least 2.14 g/cm$^3$. Besides, the standard specific gravity of the fluoropolymer, measured according to ASTM D4895, is advantageously of at most 2.22 g/cm$^3$, preferably of at most 2.19 g/cm$^3$, and more of at most 2.18 g/cm$^3$.

The fluoropolymer consists advantageously of particles.

The fluoropolymer particles develop a specific surface area BET of advantageously at least 1 m$^2$/g, preferably at least 3 m$^2$/g, still more preferably at least 5 m$^2$/g, and the most preferably of at least 7 m$^2$/g. Besides, the fluoropolymer particles develop a specific surface area BET of advantageously at most 30 m$^2$/g, preferably at most 15 m$^2$/g, and more preferably at most 10 m$^2$/g.

The fluoropolymer particles are preferably in powder form.

The fluoropolymer is advantageously not obtained by a process comprising a polymerization step the product of which are polymer particles of from a few microns up to a few thousands of microns of diameter. Example of such processes are those comprising a suspension polymerization step.

The fluoropolymer is advantageously obtained by any process comprising a polymerization step the product of which is a latex of polymer particles (called "primary particles"), i.e. a stable dispersion ("emulsion") of polymer particles having a mean diameter in weight of below 1000 nm in a dispersion medium, generally water.

In a particular embodiment of the present invention, the primary particles of the latex can have a mean diameter in weight of below 100 nm. However, the primary particles of the latex have usually a mean diameter in weight of at least 100 nm, preferably at least 150 nm, and more preferably at least 180 nm. In addition, they have a mean diameter in weight of preferably at most 400 nm, and more preferably at most 300 nm.

Examples of processes comprising a polymerization step the product of which is a latex are those comprising an emulsion polymerization step (with the involvement of a water soluble initiator) or a microsuspension polymerization step (with the involvement of an oil soluble initiator). Processes comprising a microemulsion polymerization step as described in U.S. 6,297,334 are suitable for preparing primary particles having a mean diameter in weight of below 100 nm.

A mild stirring is advantageously applied during the polymerization step to prevent the coagulation of the fluoropolymer primary particles.

The polymerization step takes place advantageously in the presence of an emulsifier, preferably in a sufficiently high amount to stabilize the emulsion of the fluoropolymer primary particles.

The emulsifier is preferably a fluorosurfactant. More preferably, the fluorosurfactant is chosen from :

- $CF_3(CF_2)_{n1}COOM$, in which $n_1$ is an integer ranging from 4 to 10, preferably from 5 to 7, and more preferably being equal to 6 ; M represents H, $NH_4$, Na, Li or K, preferably $NH_4$;

- $T(C_3F_6O)_{n0}(CFXO)_{m0}CF_2COOM$, in which T represents Cl or a perfluoroalkoxide group $C_kF_{2k+1}O$ with k =integer from 1 to 3, one F atom being optionally substituted by a Cl atom ; no is an integer ranging from 1 to 6 ; $m_0$ is an integer ranging from 0 to 6 ; M represents H, $NH_4$, Na, Li or K ; X represents F or $CF_3$;
- $F-(CF_2—CF_2)_{n2}—CH_2—CH_2—SO_3M$, in which M represents H, $NH_4$, Na, Li or K, preferably H ; $n_2$ is an integer ranging from 2 to 5, preferably $n_2$=3;
- A-$R_f$-B bifunctional fluorinated surfactants, in which A and B, equal to or different from each other, are $-(O)_pCFX—-COOM$; M represents H, $NH_4$, Na, Li or K, preferably M represents $NH_4$; X = F or $CF_3$; p is an integer equal to 0 or 1; $R_f$ is a linear or branched perfluoroalkyl chain, or a (per)fluoropolyether chain such that the number average molecular weight of A-$R_f$-B is in the range 300-1,800.

A co-stabilizer is advantageously used in combination with the emulsifier. Paraffins with a softening point in the range 48°C - 62°C are preferred as co-stabilizers.

The fluoropolymer is advantageously obtained by any process comprising an emulsion polymerization step.

A detailed description of processes comprising an emulsion polymerization step of fluorinated monomers is available notably in US 4,016,345, US 4,725,644 and US 6,479,591, the whole content of which is herein incorporated by reference.

The water-soluble initiator is advantageously chosen from persulphates, permanganates and hydrosoluble organic peroxides, such as disuccinic acid peroxide.

The water-soluble initiator can be optionally used in combination with a reducing agent. An example thereof is $(NH_4)_2Fe(SO_4)_2.6H_2O$ (Mohr's salt).

Subsequent to the polymerization step, the fluoropolymer is advantageously separated from its dispersion medium by any known technique such as spray-drying or coagulation. The fluoropolymer is advantageously separated from its dispersion medium by coagulation.

When the fluoropolymer is separated from its dispersion medium by coagulation, it is advantageously diluted down to a concentration of from about 10 to about 15 wt. % of polymer before being coagulated.

Coagulation takes advantageously place under mechanical stirring in the presence of at least one coagulating agent. The coagulating agent can be notably an organic compound like methanol or acetone, an inorganic salt like potassium nitrate or ammonium carbonate, or an inorganic acid like nitric acid or hydrochloric acid.

The coagulation conditions (stirring rate and temperature) are advantageously selected so as to obtain particles (secondary particles) of the desired particle size. The secondary particles are agglomerates of the primary particles.

Then, the secondary particles are advantageously separated from the water by drying in an oven at a temperature in the range 100°C-180°C; particles in powder form are obtained. This powder is commonly referred to as "fine powder" since its particles are agglomerates of fine (advantageously submicronic) primary particles, as above explained.

The particles of the powder itself (secondary particles) have advantageously a mean diameter in weight of at least 350 microns ; in addition, they have advantageously a mean diameter in weight of up to 600 microns.

Coagulation and drying are well known in the art, and disclosed notably in S. Ebnesajjad, Fluoroplastics, vol. 1 : Non-melt processible fluoroplastics, PDL, William Andrew Corp., NY, 2000.

Advantageously, the fluoropolymer is present in the polymer composition in an amount of from 5 to 99.9 wt. % (based on the total weight of the composition).

In a first preferred embodiment [embodiment (E1)], the fluoropolymer is present in the polymer composition in an amount of more than 70 wt. % (based on the total weight of the composition).

In a second preferred embodiment of the present invention [embodiment (E2)], the fluoropolymer is present in the polymer composition in an amount of at most 70 wt. % (based on the total weight of the composition).

To the purpose of the present invention, "aromatic polyimide" is intended to denote any polymer comprising more than 50 wt. % of recurring units comprising at least one aromatic ring
and at least one imide group, i.e.

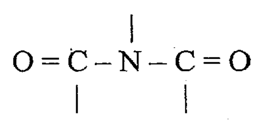

as such and/or in its amic acid form.

The imide group is advantageously linked to the aromatic ring, as illustrated below :

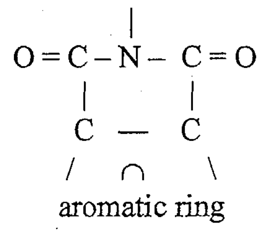

Then, the corresponding amic acid form is :

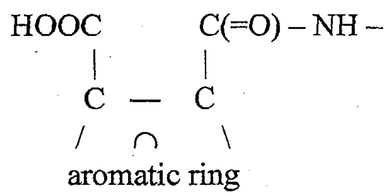

Non limitative examples of aromatic polyimides that are suitable to the purpose of the present invention are those described in L. Mascia, Thermoplastics : Materials engineering, Applied Science Publishers, London, 1982.

The recurring units of the aromatic polyimide that comprise at least one aromatic ring and at least one imide group can be free of any functional group other than the imide group, as such and/or in its amic acid form. Polymers commercialized by Du Pont as VESPEL® polyimides or by Mitsui as AURUM® polyimides comply with this criteria. Such aromatic polyimides are included in Group (II) as above defined.

Alternatively, the recurring units of the aromatic polyimide that comprise at least one aromatic ring and at least one imide group can further comprise one or more functional groups other than the imide group, as such and/or in its amic acid form. Non limitative examples of polymers complying with this criteria are aromatic polyetherimides on one hand, and aromatic polyesterimides and aromatic polyamide-imides on the other hand. Aromatic polyetherimides are included in Group (II) as above defined, while aromatic polyesterimides and aromatic polyamide-imides compose Group (I) as above defined.

To the purpose of the present invention, "aromatic polyesterimide" is intended to denote any polymer comprising more than 50 wt. % of recurring units comprising at least one aromatic ring, at least one imide group, as such and/or in its amic acid form, and at least one ester group.

To the purpose of the present invention, "aromatic polyamide-imide" is intended to denote any polymer comprising more than 50 wt. % of recurring units comprising at least one aromatic ring, at least one imide group, as such and/or in its amic acid form, and at least one amide group which is not included in the amic acid form of an imide group.

The polymer composition comprises preferably at least one aromatic polyimide chosen from aromatic polyamide-imides and aromatic polyesterimides [aromatic polyimides of Group (I)]. Very preferably, it comprises at least one aromatic polyamide-imide. Still more preferably, it comprises, as main aromatic polyimide (i.e. representing more than 50 wt.% of the aromatic polyimide), at least one aromatic polyamide-imide. Excellent results were obtained when the polymer composition comprised at least one aromatic polyamide-imide and was free of aromatic polyimides other than aromatic polyamide-imides.

The aromatic polyamide-imide comprises preferably more than 50 wt. % of recurring units (R1) formed by the polycondensation reaction between (i) at least one acid monomer chosen from trimellitic anhydride and trimellitic anhydride monoacid halides and (ii) at least one diamine. Very preferably, it comprises more than 90 wt. % of recurring units (R1). Still more preferably, it contains no recurring unit other than recurring units (R1).

Again, the imide group comprised in the recurring units (R1) can be present as such, like in recurring units (R1-a)

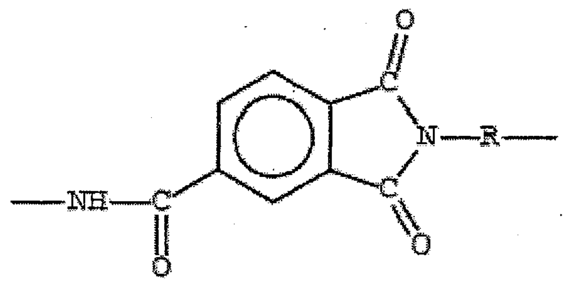

and/or in its amic acid form, like in recurring units (R1-b)

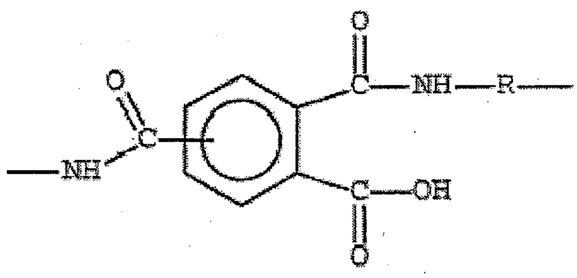

in which R is the residue of the diamine.

Among the trimellitic anhydride monoacid halides, trimellitic anhydride monoacid chloride is preferred.

The diamine can be either aliphatic or aromatic. The diamine comprises preferably at least one aromatic ring. Besides, it comprises preferably at most two aromatic rings. Very preferably, the diamine is chosen from methylenedianiline, oxydianiline and m-phenylenediamine.

Good results were obtained with aromatic polyamide-imides comprising at least one of the following recurring units:

(i)

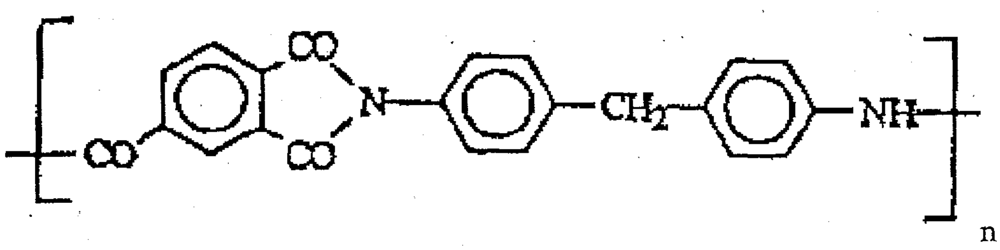

and/or the corresponding amide-amic acid containing recurring unit,
(ii)

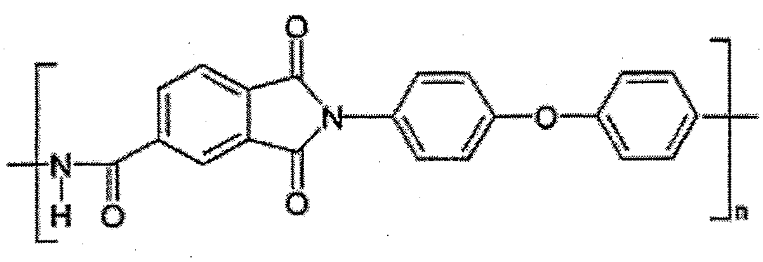

and/or the corresponding amide-amic acid containing recurring unit,
(iii)

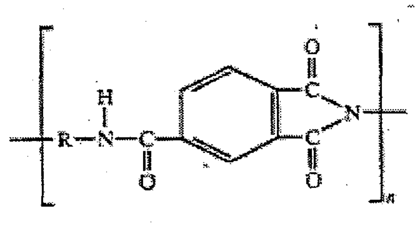

in which R is the residue of m-phenylenediamine, and/or the corresponding amide-amic acid containing recurring unit.

Very good results were obtained with aromatic polyamide-imides comprising a mix of recurring units (ii) and (iii) and/or the corresponding amide-amic acid containing recurring units.

Excellent results were obtained with aromatic polyamide-imides consisting of a mix of recurring units (ii) and (iii) and/or the corresponding amide-amic acid containing recurring units.

The aromatic polyimide consists advantageously of particles. Particles of aromatic polyimide are available in a wide variety of sizes, and aromatic polyimides having all such particle sizes are believed to be readily acceptable to the purpose of the present invention. However, applicants have found that, in certain embodiments of the present invention, the particle size of the aromatic polyimide can have an impact on the properties of the tape according to the present invention. For this reason, the aromatic polyimide consists preferably of particles having a mean diameter in weight lower than 150 microns. More preferably, more than 90% wt. of the aromatic polyimide particle has a diameter lower than 150 microns. Still more preferably, more than 90% wt. of the aromatic polyimide particle has a diameter lower than 75 microns.

The aromatic polyimide particles are preferably in powder form.

Examples of aromatic polyimides which are particularly well-suited to the purpose of the present invention are the polyamide-imides commercialized by SOLVAY ADVANCED POLYMERS, L.L.C. as TORLON® polyamide-imides.

Advantageously, the aromatic polyimide is present in the polymer composition in an amount of from 0.1 to 75 wt. % (based on the total weight of the composition).

In a certain embodiment [embodiment (E1)], the aromatic polyimide is present in the polymer composition in an amount of less than 20 wt. % (based on the total weight of the composition). In embodiment (E1), the aromatic polyimide is present in the polymer composition in an amount of preferably less than 15 wt. %, and more preferably less than 10 wt. % (based on the total weight of the composition). Besides, in this embodiment, the aromatic polyimide is present in the polymer composition in an amount of preferably at least 0.5 wt. %, more preferably at least 1 wt. % and still more preferably at least 3 wt. % (based on the total weight of the composition).

In another embodiment [embodiment (E2)], the aromatic polyimide is present in the polymer composition in an amount of at least 20 wt. % (based on the total weight of the composition). In embodiment (E2), the aromatic polyimide is present in the polymer composition in an amount of preferably at least 25 wt. %, and more preferably at least 30 wt. % (based on the total weight of the composition). Besides, in this embodiment, the aromatic polyimide is present in the polymer composition in an amount of preferably less than 60 wt. %, and more preferably less than 50 wt. % (based on the total weight of the composition).

The aromatic polyimide is advantageously finely dispersed in the polymer composition.

The aromatic polyimide is advantageously homogeneously dispersed in the polymer composition.

Optionally, the polymer composition can further comprise usual ingredients of fluoropolymer compositions, notably : (i) lubricants ; (ii) laser markable agents like titanium dioxide in an amount which, advantageously, does not exceed 10 wt. % (based on the total weight of the composition) ; (iii) pigments, preferably thermally stable pigments, like molybdenum disulfide and those disclosed in S. Ebnesajjad, Fluoroplastics, vol.1: Non-melt processible fluoroplastics, PDL, William Andrew Corp., NY, 2000, pp.141-142 ; (iv) fillers like carbon fibers, glass fibers, $BaSO_4$, $Al_2O_3$ and $SiO_2$.

When the tape according to the invention is obtained by a process comprising an extrusion step, the polymer composition comprises preferably in addition at least one ingredient of type (i). Lubricants which are suitable to the purpose of the present invention are described in Fluoroplastics, vol.1: Non-melt processible fluoroplastics, PDL, William Andrew Corp., NY, 2000, pp.138-140. Isoparaffines are preferred, especially those commercially available as Isopar® H, Isopar® L and Shell Sol® TD. In this particular embodiment of the invention, the polymer composition

comprises advantageously at least 5 wt. %, preferably at least 10 wt. % (based on the total weight of the composition) of the lubricant; in addition, the polymer composition comprises advantageously at most 30 wt. %, preferably at most 25 wt. % (based on the total weight of the composition) of the lubricant.

In a certain particular embodiment of the present invention, the polymer composition further comprises an aromatic polycondensate other than the aromatic polyimide. The aromatic polycondensate other than the aromatic polyimide is advantageously a high thermal resistant polymer. It comprises preferably more than 50 wt. % of recurring units that comprise amide, ester, sulphide or ketone functionality. Polyphtalamides (available as AMODEL® from SOLVAY ADVANCED POLYMERS, L.L.C.), polyamides consisting of recurring units derived from adipic acid and meta-xylylenediamine (available as IXEF® from SOLVAY ADVANCED POLYMERS, L.L.C.), wholly aromatic polyesters (available as XYDAR® from SOLVAY ADVANCED POLYMERS, L.L.C.), polyphenylene sulphides (available as PRIMEF® from SOLVAY ADVANCED POLYMERS, L.L.C.) and aromatic polyketones like those commonly known as PEEK or PEKK comply with this characteristic. In this embodiment, the amount of the aromatic polycondensate other than the aromatic polyimide, in particular the amount of PEEK or PEKK, is advantageously of at least 0.05 wt. %, and preferably of at least 1 wt. % (based on the total weight of the composition) ; in addition, the amount of the aromatic polycondensate other than the aromatic polyimide, in particular the amount of PEEK or PEKK, is advantageously of at most 40 % wt., preferably of at most 10 wt %. In addition, the amount of the aromatic polycondensate other than the aromatic polyimide, in particular the amount of PEEK or PEKK, is advantageously lower than the amount of the aromatic polyimide.

All the optional ingredients, likewise the aromatic polyimide, are advantageously finely dispersed in the polymer composition.

All the optional ingredients, likewise the aromatic polyimide, are advantageously homogeneously dispersed in the polymer composition.

The tape of the present invention, especially when it is thin, exhibits improved properties, in particular improved abrasion resistance, over the prior art fluoropolymer tapes of the same thickness, while maintaining all their beneficial properties, notably excellent insulating properties.

Further, the tape of the present invention, even if it is thin, exhibits a surprisingly high homogeneity of composition.

It is another objective of the present invention to provide an article comprising a fluoropolymer tape, in particular a thin fluoropolymer tape, exhibiting improved properties, in particular improved abrasion resistance, while maintaining all its beneficial properties at a high level, e.g. excellent insulating properties.

With this end in view, the present invention concerns an article comprising the tape comprising a polymer composition as above described.

The article of the present invention comprises advantageously an outermost layer which covers it at least partially, and which consists of the tape according to the present invention.

The article of the present invention is preferably a cable assembly comprising an electric or magnetic wire and an outermost layer consisting of the tape according to the present invention.

The tape comprised in the article according to the present invention has the same characteristics as the tape according to the present invention as above detailed, in all its embodiments. In particular, the polymer composition comprised in the tape comprised in the article according to the present invention has the same characteristics as the polymer composition comprised in the tape according to the present invention as above detailed, in all its embodiments.

It is another objective of the present invention to provide various processes suitable for manufacturing a fluoropolymer tape, in particular a thin fluoropolymer tape which exhibits improved properties, in particular improved abrasion resistance, while maintaining all its beneficial properties at a high level, e.g. excellent insulating properties.

With this end in view, the present invention concerns a process for manufacturing the tape comprising a polymer composition as above described, which comprises the following steps:

(A) preparing the polymer composition, then
(B) extruding the polymer composition in an extruder to obtain an extrudate, then
(C) calendering the extrudate in a calender to obtain the tape comprising the polymer composition

[process (P1) - "extrusion-calendering process"].

The polymer composition prepared in step (A) of process (P1) has the same characteristics as the polymer composition comprised in the tape according to the present invention as above detailed, in all its embodiments.

In particular, the polymer composition prepared in step (A) of process (P1) comprises advantageously in addition a lubricant, preferably a isoparaffine.

The lubricant provides to the polymer composition the consistency of a paste.

The amount of lubricant can be advantageously adjusted in order that the paste extrudate has a circular or

rectangular or dog bone like section, suitable for feeding the calender.

According to a first preferred embodiment of process (P1), step (A) is achieved by powder blending.

Accordingly, a composition ("blend") is prepared, which comprises a powder of the fluoropolymer, the aromatic polyimide and optionally other ingredients, in particular the lubricant.

This step is critical for the whole process. The addition of the lubricant is especially critical since it confers to the composition the consistency of a paste.

Before being incorporated to the blend, the fluoropolymer is advantageously at a temperature lower than 19°C ; in addition, it is advantageously essentially free of moisture. To this end, the fluoropolymer can be cooled at room temperature (if lower than 19°C) for a sufficient time and in a dry environment.

Optional ingredients like fillers and pigments are also advantageously dried in order to avoid any moisture presence during the lubricant mixing phase. Their drying can be usually be done between 120 to 180°C for a time enough to ensure the complete water removal.

According to a second preferred embodiment of process (P 1), step (A) is achieved by powder / solution blending.

According to a third preferred embodiment of the process (P1), step (A) is achieved by co-coagulation / blending.

Step (B) can be achieved notably as described in Fluoroplastics, vol.1: Non-melt processible fluoroplastics, PDL, William Andrew Corp., NY, 2000, pp.135-156.

The process is advantageously a paste extrusion process. The paste extrusion process makes it possible to extrude the fluoropolymer in the form of a "fine powder", as above defined, without requiring the melting of the fluoropolymer. This is particularly of interest when the fluoropolymer is a non processible fluoropolymer like the homopolymers of tetrafluoroethylene and the copolymers of tetrafluoroethylene consisting of more than 99 wt. % of recurring units of tetrafluoroethylene. Due to macromolecular structure of these tetrafluoroethylene homo- and copolymers, fibers can be easily obtained by applying a shear strain in the direction of the fibers length. This is achieved by generating a speed gradient at the tip of the mould, where the particles in powder form are stretched and deformed. The presence of the lubricant guarantees the hydrostatic pressure distribution in the whole polymer mass, avoiding structure and secondary particle collapse.

Step (C) can be achieved notably as described in Fluoroplastics, vol.1: Non-melt processible fluoroplastics, PDL, William Andrew Corp., NY, 2000, pp.158-160. The calendering process consists advantageously in squeezing the extrudate obtained after step (B) between heated rolls, e.g. two heated rolls, in order to reduce its thickness to the desired value.

With the same end in view, the present invention concerns a process for manufacturing the tape comprising a polymer composition as above described, which comprises the following steps :

(A) preparing the polymer composition, then
(B) compressing the polymer composition in a mould to obtain a billet, then
(C) curing the billet in an oven, then
(D) skiving the billet to obtain the tape comprising the polymer composition

[process (P2) - "skiving process"].

The polymer composition prepared in step (A) of process (P2) comprises advantageously the fluoropolymer in powder form and the aromatic polyimide in powder form.

The mould used in step (B) of process (P2) is advantageously a cylindrical mould. The pressure is advantageously applied to the polymer composition by means of a disk pushed by a ram. The ram moves at a speed of preferably more than 3 cm/min ; in addition, it moves preferably at a speed of less than 15 cm/min. The maximum pressure reached is preferably of at least 100 kg/cm$^2$ ; in addition, it is preferably of at most 300 kg/cm$^2$. When the maximum pressure is reached, it is advantageously maintained for a certain dwell time that is function of the size of the billet to be obtained. The dwell time is preferably of at least 5 ; in addition, it is preferably of at most 120 min.

The oven involved in step (C) is advantageously a static oven.

During step (C), a pressure is advantageously applied at the top of the oven. Said pressure is preferably less than 100 kg/cm2.

During step (C), the temperature in the oven follows varies advantageously cyclicly as a function of time. The maximum temperature in the oven is preferably above 300°C ; in addition, it is preferably below 400°C. Preferably, the billet is either successively heated, dwelt (i.e. maintained at a certain temperature T for a certain time t) and cooled, or it is heated up to a temperature $T_1$, then dwelt at temperature $T_1$ for a certain time $t_1$, then heated up to temperature $T_2 > T_1$, then dwelt at temperature $T_2$ for a certain time $t_2$, and so on K times (K≥2), then cooled down to temperature $T'_1$, then dwelt at dwelt at temperature $T'_1$ for a certain time $t'_1$, and so on K' times (K'≥1) [stepwise cycle] ; stepwise

cycle is very preferred. The various parameters of the cycle (e.g. $T_1$, $t_1$, $T_2$, $t_2$, K, ... $T'_1$, $t'_1$, ..., K' for stepwise cycle) are advantageously adapted by the skilled person, to account notably for the thickness of the billet and for the nature of the polymer composition. The cyclic variation of the temperature in the oven as a function of time makes it usually possible to obtain a billet comprising a sintered polymer composition which is essentially free of cracks:

Step (D) of process (P2) can be achieved by standard skiving operations. To this purpose, a skiving machine can be used. The rotation speed in the skiving machine can range from 3 $min^{-1}$ to 500 $min^{-1}$; it is preferably from 10 to 100 $min^{-1}$; good results were obtained at 25 $min^{-1}$. Besides, the temperature in the skiving machine is advantageously greater than or equal to the room temperature (i.e. typically greater than or equal to a certain temperature from 10°C to 30°C), preferably greater than or equal to 40°C, and very preferably greater than or equal to 60°C; in addition, the temperature in the skiving machine is advantageously less than or equal to 100°C, and preferably less than or equal to 90°C ; good results were obtained at 80°C.

Still with the same end in view, the present invention concerns a process for manufacturing the tape comprising a polymer composition as above described, which comprises the following steps:

(A) preparing the polymer composition in the form of a polymer bath, then
(B) immersing a substrate in the polymer bath, to obtain a foil consisting of the substrate coated with a coating comprising the polymer composition, then
(C) drying the foil, then
(D) curing the foil, then
(E) optionally, repeating steps (B), (C) and (D) up to 20 times, then
(F) peeling the coating from the substrate of the foil and collecting it, to obtain the tape comprising the polymer composition

[process (P3) - "casting process"].

The substrate involved in process (P3) is advantageously thermally stable [i.e. it does not undergo thermal degradation during the process, in particular during step (D)]. Thermally stable substrates can be found among metals and polymers.

Out of processes (P1), (P2) and (P3), process (P1) is usually preferred. However, in certain particular embodiments of the present invention, process (P2) and process (P3) gave results as good as or even better than process (P1).

Step (A) of process (P3) comprises advantageously providing a dispersion of the fluoropolymer and of the aromatic polyimide in a dispersion medium, in particular in water. To this end, the aromatic polyimide is preferably added, e.g. in powder form, to an aqueous dispersion, in particular to an aqueous emulsion, comprising the fluoropolymer. In certain embodiments of process (P3), the concentration of the fluoropolymer in the polymer bath ranges from at least 40 wt. % to at most 60 wt. % (based on the total weight of the polymer bath).

The temperature in the continuous oven involved in step (D) of process (P3) is advantageously essentially constant, except at the entry and at the exit of the oven. The average temperature in this oven is preferably above 320 ; in addition, it is preferably below 400°C.

The number of immersion-drying-curing passes [steps (B), (C) and (D) of process (P3)] is advantageously adapted as a function of the desired thickness of the tape. Usually the higher the thickness, the higher the number of passes. In a single pass process, the thickness of the tape is advantageously of at least 3 µm; in addition, it is advantageously of at most 50 µm, preferably at most 25 µm. In a multi pass process, the thickness of the tape can be up to 200 µm.

Finally, it is an objective of the present invention to improve the abrasion resistance of fluoropolymer tapes and of articles comprising an outermost layer which covers them at least partially, said outermost layer consisting of a fluoropolymer tape, while maintaining the beneficial properties of the fluoropolymer tapes at a high level, e.g. excellent insulating properties.

With this end in view, the present invention concerns the use of an aromatic polyimide as an additive of a polymer composition comprising a fluoropolymer, to improve the abrasion resistance either of a tape comprising said polymer composition, or of an article comprising an outermost layer which covers at least partially the article, said outermost layer comprising a tape comprising said polymer composition.

The tape comprising the polymer composition to which the aromatic polyimide is added to the purpose of improving the abrasion resistance complies advantageously with the same characteristics as the ones of the tape according to the present invention as above detailed.

Examples

Methods of characterization

Determination of latex particle size. The average diameter of the particles was measured by an instrument based on laser light diffusion, specifically on photon correlation spectroscopy, equipped with a Brookhaven® correlator 2030 AT model and an argon Laser light source having a wavelength of 514.5 nm by Spectra-Physics. The latex samples were diluted with water filtered on a 0.2 µm on Millipore® filter. The scattering measurement was carried out at room temperature at an angle 90° . The diameter of the latex particles was obtained by the accumulating counter method.

Determination of latex solids content. The polymer content of the latex that was discharged from the reactor was determined by gravimetry. About 20 g of latex were put in a glass beaker and placed in an oven to be dried for 1 hour at 150°C. The dry content of the latex was obtained from the formula : Dry product % = 100 x weight after drying/ latex initial weight.

Characterization of PTFE fine powders. The standard specific gravity and the particle size distribution were are characterized as specified in ASTM D4895.

The specific surface area (BET) of the PTFE fine powder was determined by SORPTY® 1750 of Carlo Erba Instruments.

Powders/lubricant blending procedure. The PTFE powder was put in a 5-liter glass jar having a wide-month to allow the wet powder discharge and a easy and accurate cleaning. The amount of powder sufficiently high so as to enable a good mixing, in this case 1 or 1.5 kg of powder was preferred. The other ingredients of the composition (polyamide-imide and, possibly in addition, one or more optional ingredients except the lubricant) were added to the powder in the jar. Then, the lubricant was added carefully not to wet the walls of the jar. The amount of lubricant can differ somehow from one composition to another. The lubricant used is ISOPAR® H, a isoparaffine oil having a viscosity at 25° of 1.13 cP. Then, the jar was put on a horizontal rollers, tumbling at 65 rpm for 10 min. At this point the rollers were stopped and the blend was maintained at room temperature for 12 h at rest. Afterwards, the jar was rolled again for 10 min. Then, the blend was sieved with a 2 mm net sieve, in order to remove unsuitable big aggregates.

Paste extrusion procedure

Preforming. The used preform had an external diameter of 75 mm and was done at room temperature. The preforming pressure was about 0.5 MPa and the dwell time at maximum pressure was about 10 min.

Paste extrusion. The extrusion was performed at room temperature. The extrudate was a 11 mm diameter rod, so that the reduction ratio was about 50. During the extrusion, the ram speed was maintained constant (at about 4 cm/min) and the extrusion pressure was recorded. The temperature of the final part of the cone of the mold was kept a temperature between 30 to 60 °C.

Calendering procedure. The calender had a 30 cm wide roll with a diameter of 30 cm. The rolls skin temperature was maintained at 80°C with an internal hot oil circulation and the rolls periferical speed was around 2 m/min. The extruded rod was fed up with a guide that made it possible to correct the loading between the cylinders. The distance between the cylinders was checked by measuring the thickness of the tape, and it was regulated with the movement of one of the two cylinders.

Sintering procedure. In order to permit the characterization of the tapes, a piece of the tape obtained from calendering, was heated in an oven. The piece cut from the obtained tape was cured in an oven at a temperature between 120°C and 200°C for 30 min, in order to evaporate the lubricant, then it was put between two stainless steel panels, having a dimension of 200 mm times 200 mm and a 2 mm thickness. The obtained so-called sandwich was introduced in an oven preheated at a temperature comprise between 310°C and 430°C for a dwell time of 5 min-60 min, then cooled at room temperature.

Thickness measurement of the tape. To evaluate the thickness of the tape, an electronic micrometer with a 0.001 mm tolerance was used. On a 2 meter long non sintered tape, the average thickness value was calculated by measuring the thickness in the middle of the tape, every 400 mm, for 6 times.

Evaluation of the tape homogeneity. The homogeneity of the tape was visually assessed in sun light. To be classified as "homogeneous", the tape had to be free of defects like white or black spots, different color areas or holes. The classification was defined in two levels : "0" meant homogeneous, "1" meant non homogeneous.

Abrasion test. The wear test was performed by measuring the weight loss of a sample that was pushed for a defined time, temperature and load against a rotating wheel having a controlled speed.

The wheel was made of steel and had an external diameter of 120 mm. The surface used for the test was the external circumference that had a roughness $R_a$ = 0.3 and had to be changed at the beginning of each trial. The sliding speed was of 30.9 m/min.

The specimen was a film with a constant thickness between 0.05 to 1 mm and a 1cm x 2cm surface. The film was fixed on a PTFE support having the same shape and bending of the wheel, that pushed the film against the steel surface uniformly and with a well distributed load condition.

A load of 6.45 kg was applied to the support in vertical direction and perpendicular to the film surface.

The specimen was weighted and fixed between the support and the wheel. The load.was applied and the wheel ran for half an hour. At this point, the low wear occurred, guaranteeing the best load distribution on the sample. The specimen was weighted and tested for 1 hour again. The weight loss after the second wear time, was considered for the evaluation of the wear according to the formula :

$$\text{Wear coeff.} = K = \frac{W_2 - W_1}{L \cdot v \cdot t \cdot \rho}$$

where:

$W_1$ = specimen weight after half an hour pretest [g]
$W_2$ = specimen weight after 1 hr test [g]
L = Load [kg]
v = sliding speed [m/min]
t = test time [hr]
$\rho$ = sample specific weight [g/cm$^3$]

The whole operation took place at room temperature.

Example 1.

Polymerization. 11 g of an aqueous solution of ammonium perfluorooctanoate and 31 litres of carefully degassed demineralized water were fed into a 50 litre autoclave equipped with a mechanical stirrer and previously put under vacuum. Also, 140 g of paraffin with a softening point in the range 52°C-54°C were previously introduced into the reactor. 500 cm$^3$ of a solution of ammonium persulfate (APS) and of disuccinic peroxide (DSAP) corresponding to 400 mg of APS and 2,000 mg of DSAP were fed into the autoclave. The autoclave was kept under mechanical stirring and was pressurized with tetrafluoroethylene up to a pressure of 20 bar at a temperature of 70°C.

When the pressure in the reactor had decreased of 0.5 bar, one started to feed tetrafluoroethylene by a compressor so as to maintain a constant pressure of 20 bar inside the reactor. In the meantime the reactor internal temperature was increased up to 85°C at a rate equal to 0.5°C/min. During the reaction 50.5 g of the aqueous solution containing 100 g/l of ammonium perfluorooctanoate were fed into the autoclave.

After 147 min, the tetrafluoroethylene feeding was stopped ; 15,800 g of tetrafluoroethylene had reacted. The reactor was vented and cooled. The latex was discharged ; it had a concentration of 507 g PTFE/l of water.

The mean diameter of the polymer primary particles, measured by laser light scattering (LLS), was equal to 248 nm.

Example 2

Co-coagulation with polyamide-imide (PAI). The latex obtained in Example 1 was added under mild agitation into a 501 vessel, in such an amount that 1000 g of PTFE was added to the vessel. Then, 720 g of Torlon® 4000TF powder were dispersed under agitation at high shear rates in 4 l of water. The so-obtained PAI dispersion was added to the latex under agitation. Finally, 100 ml of $HNO_3$ 20% wt. was added, thereby causing coagulation. The obtained coagulated powder was washed with demineralized water and dried in a static oven at 140°C for 32 h.

Example 3

Preparation of a low thickness PTFE-PAI tape. 820 g of the co-coagulated powder obtained in example 2 were introduced into a glass jar. 180 g of ISOPAR® H were added to the co-coagulated powder, by taking care not to wet the walls of the jar. The jar was sealed to prevent solvent loss, tumbled for 10 min at room temperature at a speed of 65 rpm, left at rest for 12 h at room temperature and finally tumbled for 10 minute again. The blend was then sieved with a 2 mm net, and preformed in a 75 mm chamber with a dwell time of 10 min at 5 bar and room temperature. A rod of 11 mm diameter was extruded from the preform, at 25 bar and room temperature. The rod was fed to the calender, which was maintained at 80°C. A film of 40 μm thick and 4 cm width was obtained. The film was dried at 180°C for 10

min and was sintered between two stainless steel plates at 370°C for 30 min. The wear resistance and homogeneity of the film were tested according to the above described methods. Excellent results were obtained.

Example 4

Preparation of a low thickness PTFE-PAI tape. 50 g of Torlon® 4000TF PAI and 750 g of Algoflon® PTFE DF210, were introduced into a glass jar at room temperature. 200 g of ISOPAR® H lubricant were added to the powders, by taking care not to wet the walls of the jar. The jar was sealed in order to prevent solvent loss, and tumbled for 10 min at room temperature at a speed of 65 rpm, then left at rest for 12 h at room temperature and finally tumbled again for 10 min. The blend was then sieved with a 2 mm net, and preformed in a 75 mm chamber with a dwell time of 10 min at 5 bar and room temperature. A rod of 11 mm diameter was extruded from the preform, at 25 bar and room temperature. The rod was fed to the calender, which was maintained at 80°C. A film of 40 µm thick and 4 cm width was obtained. The film was dried at 180°C for 10 min and was sintered between two stainless steel plates at 370°C for 30 min. The wear resistance and homogeneity of the film were tested according to the above described methods. Excellent results were obtained: In particular, a wear factor of $5.0 \times 10^{-6}$ was measured.

Example 5

Preparation of low thickness PTFE-PAI-polyphenylene sulfide (PPS) tape. 49.5 g of Ryton® P-6 PPS powder were cured at 130°C in an oven for 12 h, then cooled at room temperature in a dry environment and added to 750 g of Algoflon® PTFE DF210 and 0.5 g of Torlon® 4000TF PAI into a glass jar. 200g of ISOPAR® H lubricant were added to the powders, by taking care not to wet the walls of the jar. The jar was sealed in order to avoid solvent loss, tumbled for 10 min at room temperature at a speed of 65 rpm, left at rest for 12 h at room temperature, and finally tumbled again for 10 min. The blend was then sieved with a 2 mm net, and preformed in a 75 mm chamber with a dwell time of 10 min at 5 bar and room temperature. A rod of 11 mm diameter was extruded from the preform, at 25 bar and room temperature. The rod was fed to the calender, which was maintained at 80°C. A film of 40 µm thick and 4 cm width was obtained. The film was dried at 180°C for 10 min and was sintered between two stainless steel plates at 370°C for 30 min. The wear resistance and homogeneity of the film were tested according to the above described methods. Excellent results were obtained.

Example 6

Preparation of low thickness PTFE-PAI-$TiO_2$ tape. 49.7 g of Torlon® 4000TF PAI powder was added to 750 g of Algoflon® PTFE DF210 and 0.3 g of $TiO_2$ into a glass jar. 200 g of ISOPAR® H were added to the powders, by taking care not to wet the walls of the jar. The jar was sealed to prevent solvent loss, tumbled for 10 min at room temperature at a speed of 65 rpm, left at rest for 12 h at room temperature and finally tumbled for 10 minute again. The blend was then sieved with a 2 mm net, and preformed in a 75 mm chamber with a dwell time of 10 min at 5 bar and room temperature. A rod of 11 mm diameter was extruded from the preform, at 25 bar and room temperature. The rod was fed to the calender, which was maintained at 80°C. A film of 40 µm thick and 4 cm width was obtained. The film was dried at 180°C for 10 min and was sintered between two stainless steel plates at 370°C for 30 min. The wear resistance and homogeneity of the film were tested according to the above described methods. Excellent results were obtained.

Example 7 (comparative example)

Preparation of low thickness PTFE tape. 770 g of Algoflon® PTFE DF210 were introduced into a glass jar. 180 g of ISOPAR® H lubricant were added to the powder, by taking care not to wet the walls of the jar. The jar was sealed to prevent solvent loss, tumbled for 10 min at room temperature at a speed of 65 rpm, left at rest for 12 h at room temperature and finally tumbled again for 10 minute. The blend was then sieved with a 2 mm net, and preformed in a 75 mm chamber with a dwell time of 10 min at 5 bar and room temperature. A rod of 11 mm diameter was extruded from the preform, at 25 bar and room temperature. The rod was fed to the calender that is maintained at 80°C. A film of 40 µm thick and 4 cm width was obtained. The film was dried at 180°C for 10 min and was sintered between two stainless steel plates at 370°C for 30 min. The wear resistance of the film was tested according to the above described method. Poor results were obtained. In particular, a wear factor of $2.9 \times 10^{-4}$ was measured.

Example 8 (comparative example)

Preparation of low thickness PTFE-$TiO_2$ tape. 2 g of $TiO_2$ powder were added to 768 g of Algoflon® PTFE

DF21 0 into a glass jar. 180 g of ISOPAR® H were then added to the powders, by taking care not to wet the jar wall. The jar was sealed to prevent solvent loss, tumbled for 10 min at room temperature at a speed of 65 rpm, left at rest for 12 h at room temperature and finally tumbled again for 10 min. The blend is then sieved with a 2 mm net, and preformed in a 75 mm chamber with a dwell time of 10 min at 5 bar and room temperature. A rod of 11 mm diameter is extruded from the preform, at 25 bar and room temperature. The rod was fed to the calender, which was maintained at 80°C. A film of 40 µm thick and 4 cm width was obtained. The film was dried at 180°C for 10 min and was sintered between two stainless steel plates at 370°C for 30 min. The wear resistance and homogeneity of the film were tested according to the above described methods. Poor results were obtained.

## Claims

**1.** Tape comprising a polymer composition comprising at least one fluoropolymer and at least one aromatic polyimide chosen from

- aromatic polyamide-imides and aromatic polyesterimides [aromatic polyimides of Group (I)],

and, in addition, from

- aromatic polyimides other than aromatic polyimides of Group (I) [aromatic polyimides of Group (II)],

provided that, when the polymer composition is free of aromatic polyimides of Group (I), it comprises more than 5 wt. % (based on the total weight of the composition) of at least one aromatic polyimide chosen from aromatic polyimides of Group (II).

**2.** Tape according to claim 1, **characterized in that** the fluoropolymer is chosen from homopolymers of tetrafluoroethylene and copolymers of tetrafluoroethylene comprising more than 97 wt. % of recurring units derived from tetrafluoroethylene.

**3.** Tape according to either claim 1 or 2, **characterized in that** the fluoropolymer consists of fluoropolymer particles developing a specific surface area BET of at least 3 $m^2$/g.

**4.** Tape according to anyone of claims 1 to 3, **characterized in that** the polymer composition comprises at least one aromatic polyimide chosen from aromatic polyamide-imides and aromatic polyesterimides [aromatic polyimides of Group (I)].

**5.** Tape according to claim 4, **characterized in that** the polymer composition comprises at least one aromatic polyamide-imide.

**6.** Tape according to claim 5, **characterized in that** the aromatic polyamide-imide comprises more than 50 wt. % of recurring units (R1) formed by the polycondensation reaction between (i) at least one acid monomer chosen from trimellitic anhydride and trimellitic anhydride monoacid halides and (ii) at least one diamine.

**7.** Tape according to anyone of claims 1 to 6, **characterized in that** the aromatic polyimide is present in the polymer composition in an amount of less than 20 wt. % (based on the total weight of the composition).

**8.** Tape according to anyone of claims 1 to 6, **characterized in that** the aromatic polyimide is present in the polymer composition in an amount of at least 20 wt. % (based on the total weight of the composition).

**9.** Article comprising the tape according to anyone of claims 1 to 8.

**10.** Article according to claim 9, **characterized in that** it is a cable assembly comprising an electric or magnetic wire and an outermost layer consisting of the tape.

**11.** Process for manufacturing the tape comprising a polymer composition according to anyone of claims 1 to 8, which comprises the following steps:

(A) preparing the polymer composition, then

(B) extruding the polymer composition in an extruder to obtain an extrudate, then

(C) calendering the extrudate in a calender to obtain the tape comprising the polymer composition

[process (P1) - "extrusion-calendering process"].

**12.** Process according to claim 11, **characterized in that** the polymer composition further comprises a lubricant.

**13.** Process according to claim 12, **characterized in that** the lubricant is a isoparaffine.

**14.** Process for manufacturing the tape comprising a polymer composition according to anyone of claims 1 to 8, which comprises the following steps :

(A) preparing the polymer composition, then

(B) compressing the polymer composition in a mould to obtain a billet, then

(C) curing the billet in an oven, then

(D) skiving the billet to obtain the tape comprising the polymer composition

[process (P2) - "skiving process"].

**15.** Process for manufacturing the tape comprising a polymer composition according to anyone of claims 1 to 8, which comprises the following steps :

(A) preparing the polymer composition in the form of a polymer bath, then

(B) immersing a substrate in the polymer bath, to obtain a foil consisting of the substrate coated with a coating comprising the polymer composition, then

(C) drying the foil, then

(D) curing the foil, then

(E) optionally, repeating steps (B), (C) and (D) up to 20 times, then

(F) peeling the coating from the substrate of the foil and collecting it, to obtain the tape comprising the polymer composition

[process (P3) - "casting process"].

**16.** Use of an aromatic polyimide as an additive of a polymer composition comprising a fluoropolymer, to improve the abrasion resistance either of a tape comprising said polymer composition, or of an article comprising an outermost layer which covers at least partially the article, said outermost layer comprising a tape comprising said polymer composition.

European Patent Office

# EUROPEAN SEARCH REPORT

Application Number
EP 04 07 6703

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 023 047 A (DAIKIN IND LTD)<br>28 January 1981 (1981-01-28)<br>* page 4, line 22 - page 5, line 15 *<br>* page 10, line 3 - line 5; examples * | 1-11 | C08J5/18<br>C08L27/12<br>C08L79/08<br>B29D7/01<br>B29C41/00<br>B29C47/00<br>H01B3/44<br>H01B3/30<br>H01C7/02 |
| X | US 5 320 789 A (NISHII MASANOBU ET AL)<br>14 June 1994 (1994-06-14)<br>* examples 8,913 * | 1-5,7,9,<br>14-16 | |
| A | EP 1 384 753 A (PLASTIC OMNIUM CIE)<br>28 January 2004 (2004-01-28)<br>* claims; examples * | 1-5,7,9,<br>11 | |
| X | WO 95/12698 A (MARINI INGO ; BACHMAIR JOSEF (AT); WIMMER ADALBERT (AT); CHEMIEFASER L) 11 May 1995 (1995-05-11)<br>* page 3, line 1 - line 23; claims; examples * | 1-3,7-9,<br>11-13 | |
| X | US 4 433 104 A (GILES JR HAROLD F)<br>21 February 1984 (1984-02-21)<br>* column 7, line 1 - line 19; claims; examples *<br>* column 6, line 23 - line 40 * | 1-3,7-11 | TECHNICAL FIELDS SEARCHED (Int.Cl.7) |
| X | WO 02/03397 A (AYUKAWA HIROSHI ; KOBAYASHI MITSUAKI (JP); 3M INNOVATIVE PROPERTIES CO) 10 January 2002 (2002-01-10)<br>* claims; examples * | 1-5,8,9,<br>15 | C08J<br>C08L<br>H01B<br>B29D<br>B29C |
| A | US 6 485 735 B1 (DANIEL STEVIE ET AL)<br>26 November 2002 (2002-11-26)<br>* column 7, line 23 - column 8, line 16; figures 4,4a * | 1-16 | |
| A | WO 90/04618 A (MARKEL CORP)<br>3 May 1990 (1990-05-03)<br>* claims; examples * | 1-16 | |

The present search report has been drawn up for all claims

| Place of search | Date of completion of the search | Examiner |
|---|---|---|
| The Hague | 6 December 2004 | de Los Arcos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 04 07 6703

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2004

| Patent document cited in search report | | Publication date | Patent family member(s) | | | Publication date |
|---|---|---|---|---|---|---|
| EP 0023047 | A | 28-01-1981 | JP | 1105826 | C | 30-07-1982 |
| | | | JP | 56018624 | A | 21-02-1981 |
| | | | JP | 56048528 | B | 16-11-1981 |
| | | | DE | 3067534 | D1 | 24-05-1984 |
| | | | EP | 0023047 | A1 | 28-01-1981 |
| | | | US | 4451616 | A | 29-05-1984 |
| US 5320789 | A | 14-06-1994 | JP | 3174147 | B2 | 11-06-2001 |
| | | | JP | 5339396 | A | 21-12-1993 |
| | | | JP | 2076091 | C | 25-07-1996 |
| | | | JP | 5125208 | A | 21-05-1993 |
| | | | JP | 7108944 | B | 22-11-1995 |
| EP 1384753 | A | 28-01-2004 | FR | 2842532 | A1 | 23-01-2004 |
| | | | EP | 1384753 | A1 | 28-01-2004 |
| | | | US | 2004077760 | A1 | 22-04-2004 |
| WO 9512698 | A | 11-05-1995 | AT | 399882 | B | 25-08-1995 |
| | | | AT | 222193 | A | 15-12-1994 |
| | | | WO | 9512698 | A1 | 11-05-1995 |
| | | | AT | 181377 | T | 15-07-1999 |
| | | | BR | 9406468 | A | 23-01-1996 |
| | | | CN | 1117299 | A ,B | 21-02-1996 |
| | | | DE | 59408419 | D1 | 22-07-1999 |
| | | | EP | 0677120 | A1 | 18-10-1995 |
| | | | JP | 8505430 | T | 11-06-1996 |
| | | | RU | 2135531 | C1 | 27-08-1999 |
| | | | US | 5804290 | A | 08-09-1998 |
| US 4433104 | A | 21-02-1984 | CA | 1190345 | A1 | 09-07-1985 |
| | | | EP | 0126781 | A1 | 05-12-1984 |
| | | | WO | 8403896 | A1 | 11-10-1984 |
| WO 0203397 | A | 10-01-2002 | AU | 7297901 | A | 14-01-2002 |
| | | | EP | 1297539 | A2 | 02-04-2003 |
| | | | JP | 2002203430 | A | 19-07-2002 |
| | | | WO | 0203397 | A2 | 10-01-2002 |
| US 6485735 | B1 | 26-11-2002 | US | 6213995 | B1 | 10-04-2001 |
| WO 9004618 | A | 03-05-1990 | US | 5045600 | A | 03-09-1991 |
| | | | ES | 2018114 | A6 | 16-03-1991 |
| | | | WO | 9004618 | A1 | 03-05-1990 |
| | | | WO | 0138749 | A1 | 31-05-2001 |
| | | | US | 6040384 | A | 21-03-2000 |
| | | | US | 2002123571 | A1 | 05-09-2002 |

EPO FORM P0459

For more details about this annex : see Official Journal of the European Patent Office, No. 12/82